(19) Europäisches Patentamt / European Patent Office / Office européen des brevets

(11) **EP 2 242 992 B1**

(12) **FASCICULE DE BREVET EUROPEEN**

(45) Date de publication et mention de la délivrance du brevet:
**08.05.2019 Bulletin 2019/19**

(21) Numéro de dépôt: **09710391.5**

(22) Date de dépôt: **11.02.2009**

(51) Int Cl.:
**G01C 19/66** *(2006.01)*        **H01S 3/083** *(2006.01)*

(86) Numéro de dépôt international:
**PCT/EP2009/051566**

(87) Numéro de publication internationale:
**WO 2009/101105 (20.08.2009 Gazette 2009/34)**

(54) **METHODE DE POSITIONNEMENT DES MIROIRS D'UN GYROMETRE LASER TRIAXE, NOTAMMENT AU DEMARRAGE DU GYROMETRE**

VERFAHREN ZUR POSITIONIERUNG DES SPIEGELS EINES DREIACHSIGEN LASERGYROMETERS, INSBESONDERE BEI DER INBETRIEBNAHME DES GYROMETERS

METHOD FOR POSITIONING THE MIRRORS OF A THREE-AXIS LASER GYROMETER, IN PARTICULAR WHEN STARTING THE GYROMETER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **15.02.2008 FR 0800837**

(43) Date de publication de la demande:
**27.10.2010 Bulletin 2010/43**

(73) Titulaire: **THALES**
**92400 Courbevoie (FR)**

(72) Inventeurs:
• **GUTTY, François**
**91120 Palaiseau (FR)**
• **BONNAUDET, Etienne**
**F-86130 St George Les Baillargeaux (FR)**
• **VAUZELLE, Patrick**
**F-86530 Cenon Sur Vienne (FR)**
• **THIBAUDEAU, Laurent**
**F-86000 Poitiers (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 512 198      US-A- 4 755 057**
**US-A- 4 762 415      US-A- 5 357 338**
**US-A- 5 450 198**

**Description**

La présente invention concerne une méthode de positionnement de miroirs mobiles dans un dispositif comportant des cavités lasers, la puissance des ondes laser parcourant les cavités dépendant de la position des miroirs. Elle s'applique par exemple au démarrage d'un gyromètre laser, notamment un gyromètre laser à trois axes.

Un gyromètre est un capteur permettant de mesurer une vitesse angulaire. Par exemple, une centrale inertielle utilise trois gyromètres et trois accéléromètres pour déterminer complètement le mouvement du porteur à chaque instant et recomposer ainsi son déplacement. Un gyromètre laser mono-axe permet de mesurer une vitesse angulaire autour d'un seul axe. Il comporte une cavité laser en anneau dans laquelle deux faisceaux se propagent en sens opposé. Il comporte aussi un système de lecture. Lorsque la cavité est mise en rotation à une vitesse $\Omega$, les faisceaux voient, par effet Sagnac, leurs fréquences optiques s'écarter d'une quantité proportionnelle à $\Omega$. Le dispositif qui permet la mesure de cette différence de fréquence constitue le système de lecture. La cavité laser en anneau est constituée d'une cavité optique en anneau, d'un coupleur de sortie des faisceaux laser et d'un milieu amplificateur optique avec un système permettant de l'alimenter. La cavité optique en anneau, formée par au moins trois miroirs proposant un chemin fermé, peut être parcourue par deux faisceaux dans deux sens opposés. Lorsque la cavité est plane, la direction de l'axe sensible du gyromètre est simplement donnée par la normale au plan. Le périmètre de la cavité optique, obtenu avec la somme des distances entre les miroirs, est aussi dénommé longueur de cavité et noté L. Par exemple, quatre miroirs A, E, B, et C peuvent former une cavité optique carrée en anneau dont la longueur est quatre fois le côté AE. Cette cavité peut être parcourue par une onde en sens horaire de A vers E et par une autre onde dans le sens anti-horaire de E vers A. Le coupleur de sortie qui permet d'extraire une fraction de l'intensité des ondes laser parcourant la cavité est habituellement constitué par l'un des miroirs qui est légèrement transmettant. La cavité optique joue également le rôle de filtre spectral : seuls les modes de la cavité - ondes dont la fréquence optique est un multiple de c/L où c est la vitesse de la lumière - peuvent s'y propager en boucle. Pour des cavités de tailles usuelles, c'est-à-dire où L est inférieur à 30 cm, l'intervalle spectral c/L entre deux modes est supérieur au Gigahertz (GHz). Dans les gyromètres laser, le milieu amplificateur est habituellement constitué d'un mélange gazeux d'Hélium et de Néon sous faible pression, emprisonné hermétiquement dans la cavité. L'amplification optique est alors générée sur un ou plusieurs segments de la cavité où le gaz est ionisé, par exemple à l'aide d'une décharge entre une anode et une cathode. Toutefois, le gain n'est disponible que dans certaines bandes de fréquences optiques, relativement étroites de surcroît pour un milieu amplificateur gazeux donné, d'une largeur typiquement de l'ordre du Gigahertz. L'effet laser est alors obtenu aux fréquences optiques pour lesquelles le gain dans le milieu amplificateur est supérieur aux pertes subies lors de la propagation dans la cavité et lors de la réflexion sur ses miroirs. Dans le cas du mélange Hélium-Néon, l'une des bandes d'amplification se trouve dans le domaine visible, au voisinage de la longueur d'onde 633 nanomètres (nm). Habituellement, les miroirs sont conçus pour n'être suffisamment réfléchissants que dans cette plage de fréquences optiques, si bien que l'effet laser n'est possible qu'au voisinage de la longueur d'onde de 633 nm . Avec les ordres de grandeurs précédents, les modes de cavité peuvent se trouver relativement éloignés du maximum du gain. Au démarrage du gyromètre, la longueur L de la cavité doit donc être ajustée vers une valeur optimale pour amener un mode au maximum du gain laser. Mais en fonction des phénomènes thermiques de dilatation et de contraction subis par le gyromètre entre deux mises sous tension, la longueur L varie. Si, lors de la mise sous tension, la longueur de cavité n'est pas adaptée, le gyromètre ne bénéficie plus pleinement du gain du milieu amplificateur contenu dans la cavité.

Une solution actuelle pour corriger ce phénomène est l'utilisation d'un miroir translatable, c'est-à-dire un miroir mobile pouvant être déplacé en suivant un mouvement de translation, et d'un miroir permettant de prélever une partie de l'une des deux ondes afin de mesurer son intensité. L'ajustement du miroir mobile se fait par des décalages successifs en suivant un mouvement de translation dans la cavité. Pour chaque valeur de décalage, l'intensité de l'onde est mesurée. Le but est alors de converger vers une valeur de décalage correspondant au maximum d'intensité, cette valeur correspondant au gain maximal de la cavité optique permettant de bénéficier au maximum de l'effet laser. Mais le temps de convergence au démarrage d'un tel gyromètre selon l'art antérieur est souvent long, ceci pour diverses raisons. Il s'agit là de l'un des problèmes techniques que la présente invention se propose de résoudre.

Une première solution de l'art antérieur consiste à balayer dans un premier temps toute la plage de décalage du miroir mobile d'une extrémité à l'autre en mesurant l'intensité de l'onde émise, puis à revenir dans un deuxième temps à la valeur de décalage ayant permis de mesurer la plus grande intensité. Mais cette solution souffre d'un phénomène d'hystérésis : au retour à la valeur de décalage qui a correspondu à un maximum, certaines caractéristiques ont changé et le maximum n'est plus tout à fait là. Il faut donc un temps supplémentaire pour converger doucement vers le maximum. Une telle solution est décrite par exemple dans le document US 4 755 057 A.

Une deuxième solution de l'art antérieur consiste à balayer à partir d'une position donnée du miroir mobile, cette position étant issue d'une table qui fait correspondre des conditions de température extérieure à des positions du miroir mobile, et à s'arrêter au premier maximum rencontré. La table est généralement fournie par le fabricant du gyromètre pour un type de gyromètre donné. À des conditions données de température extérieure, elle fait correspondre une position du miroir mobile susceptible de fournir l'intensité maximale ou tout moins de fournir une intensité proche de l'intensité maximale. Mais en faisant varier la longueur L de la cavité optique avec un décalage du miroir, l'onde émise ne présente pas uniquement des maximums globaux ou principaux pour lesquels son intensité atteint véritablement une borne supérieure ; des maximums locaux ou secondaires pour lesquelles l'intensité n'est maximale qu'au voisinage d'une position peuvent également survenir à proximité du minimum, traduisant une compétition entre deux modes, l'un sur le point de sortir d'un côté de la courbe de gain alors que l'autre rentre à l'opposé. Par conséquent, le miroir mobile peut dans un premier temps s'attarder temporairement autour d'une position correspondant à un maximum secondaire, puis seulement dans un deuxième temps tendre vers une position correspondant à un maximum principal. Ce phénomène ralentit considérablement le temps de convergence, entraînant l'indisponibilité du gyromètre. Une telle solution est par exemple décrite dans le document US 5 450 198 A.

Une fois trouvée la valeur de décalage correspondant au maximum de gain, un asservissement est requis pour effectuer des décalages périodiques, réguliers et de plus faible amplitude du miroir mobile et corriger les phénomènes thermiques de dilatation/contraction subis par la cavité. Ces décalages doivent permettre de suivre le maximum en faisant varier de manière quasi continue la position du miroir mobile. Mais suivre un maximum en faisant varier de manière quasi continue la position du miroir mobile n'est pas une chose aisée. Dans les solutions de l'art antérieur notamment, un phénomène dit de « saut de mode » est fréquemment observé. Ce phénomène sera détaillé dans la suite de la demande. Il se caractérise par un décalage brutal du miroir mobile et par une variation brutale de la fréquence de l'onde émise. Il s'agit là encore de l'un des problèmes techniques que la présente invention se propose de résoudre.

Il existe également des gyromètres laser à trois axes ou « triaxe », comportant trois cavités optiques disposées orthogonalement deux à deux. Chacune des trois cavités optiques reprend les principes de fonctionnement décrits précédemment d'un gyromètre monoaxe pour mesurer la vitesse angulaire du gyromètre autour de son axe sensible. Dans ces gyromètres triaxes, des miroirs mobiles sont souvent partagés entre les cavités, de sorte que le décalage d'un miroir mobile a un impact non pas sur la longueur d'une cavité mais sur la longueur de deux cavités. L'art antérieur suggère d'appliquer indépendamment aux trois cavités d'un tel gyromètre triaxe l'une des deux solutions de l'art antérieur décrites précédemment pour faire converger au démarrage un gyromètre monoaxe. Dans un premier temps, il s'agit de déterminer successivement pour chacune des trois cavités la longueur qui lui confère la plus grande intensité, par l'une des deux méthodes de l'art antérieur décrites précédemment. Une fois les trois longueurs déterminées, il s'agit dans un deuxième temps de déterminer un triplet de positions des miroirs qui permet de réaliser simultanément les trois longueurs de cavité, ceci par une méthode analytique qui sera décrite par la suite. Mais en appliquant indépendamment aux trois cavités d'un gyromètre triaxe l'une des deux solutions de l'art antérieur, il n'est pas tenu compte de la non-reproductibilité des cavités et donc de leurs différences de comportement. Ainsi, une cavité peut suivre un maximum principal pendant qu'une autre cavité peut suivre un maximum secondaire. Il va sans dire également que les phénomènes d'hystérésis, de retards induits par des maxima secondaires et de saut de modes sont alors d'autant plus difficiles à corriger qu'ils ont lieu simultanément dans des cavités dont les longueurs sont liées. Le temps de convergence d'un tel gyromètre à trois cavités est donc plus difficile à contrôler. Il s'agit là encore de l'un des problèmes techniques que la présente invention se propose de résoudre.

L'invention a notamment pour but de minimiser au démarrage d'un gyromètre le temps nécessaire pour converger vers le gain maximal des cavités optiques d'un gyromètre laser triaxe. Pour cela, l'invention propose notamment une séquence de démarrage pour un gyromètre laser comportant une phase de pilotage des miroirs mobiles qui améliore la détermination du positionnement initial des miroirs mobiles dans les cavités optiques. A cet effet, l'invention a pour objet une méthode de positionnement de trois miroirs translatables dans un gyromètre comportant trois cavités laser en anneau, selon la revendication 1.

Avantageusement, le triplet initial de positions des trois miroirs peut être extrait d'une table faisant correspondre à des valeurs de température un triplet de positions des miroirs conférant respectivement à chacune des cavités optiques une longueur pour laquelle le milieu amplificateur offre un gain maximum à ladite température.

Par exemple, les milieux amplificateurs peuvent être des gaz ionisables par une décharge électrique dans un gyromètre triaxe.

Les trois cavités optiques ayant un même intermode, l'amplitude de déplacement des trois miroirs peut être égale à la moitié dudit intermode.

La méthode peut comporter une phase préalable de balayage des trois miroirs dans des plages couvrant les plages de déplacement des miroirs mais sans mesurer les intensités des ondes, de sorte à diminuer l'hystérésis entre la phase de déplacement des miroirs et la phase de positionnement des miroirs.

Si le dispositif comporte un mécanisme d'ajustement permettant, à partir du triplet final de positions, d'ajuster en permanence les positions des miroirs translatables de sorte à assurer que les cavités ont des longueurs respectives leur permettant de fournir en permanence une intensité maximale, alors la méthode peut comporter une phase finale de comparaison du triplet final de positions avec un triplet de positions vers lequel le mécanisme d'ajustement fait converger les miroirs après un délai donné. Si l'un des miroirs s'est éloigné de la position qu'il avait à l'issue de la phase de positionnement au-delà d'un seuil donné, les phases précédentes de la méthode peuvent alors réitérées et/ou la différence peut être mise en mémoire et/ou le dispositif peut être mis en panne.

La présente invention a encore pour principaux avantages que le positionnement initial du ou des miroirs n'est plus dépendant de la fréquence de fonctionnement du système d'asservissement des miroirs, ce système étant plus adapté à suivre le maximum de puissance plutôt qu'à le trouver initialement. En effet, il travaille dans une gamme de fréquence « lente » de l'ordre du Hertz. Un système implémentant la présente invention pour déterminer une position initiale peut travailler dans une gamme de fréquence « rapide » de l'ordre du kilohertz.

D'autres caractéristiques et avantages de l'invention apparaîtront à l'aide de la description qui suit faite en regard de dessins annexés qui représentent :

- la figure 1a, par une vue en perspective, une illustration d'un exemple de cavités optiques d'un gyromètre laser triaxe selon l'art antérieur ;
- la figure 1b, par un graphe, une illustation des modes laser d'une cavité optique d'un gyromètre selon l'art antérieur ;
- la figure 2, par trois graphes, une illustration d'un exemple d'évolution des puissances laser émises par les cavités optiques d'un gyromètre triaxe en fonction des tensions de commande de leurs miroirs mobiles ;
- la figure 3, par trois graphes, une illustration d'un exemple d'évolution des puissances laser émises par les trois cavités optiques de même intermode d'un gyromètre triaxe en fonction de la somme des tensions de commande dont elles dépendent ;
- les figures 4 et 5, par deux graphes, des illustrations de propriétés particullières des cavités optiques de même intermode d'un gyrolaser triaxe ;
- la figure 6, par un graphe, une illustration des variations de commande des miroirs mobiles d'un gyromètre triaxe en fonction d'un gradient thermique positif ;
- la figure 7, par un graphe, une illustration du phénomène d'hystérésis observable sur le déplacement d'un miroir mobile d'une cavité optique dans un gyromètre laser selon l'art antérieur ;
- les figures 8 et 9, par deux graphes, des illustrations du mécanisme de réduction de l'hystérésis dans un gyromètre laser selon l'invention.

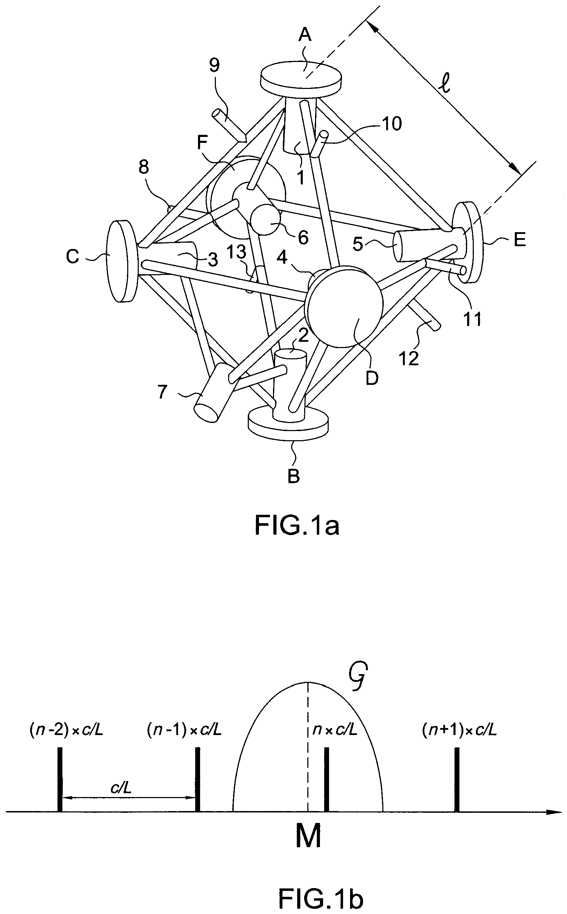

La figure 1a illustre par une vue en perspective les trois cavités optiques d'un gyromètre triaxe selon l'art antérieur. Le gyromètre comporte six miroirs A, B, C, D, E et F. Les miroirs A, B, C, D, E et F sont reliés deux à deux par des chemins optiques AC, AD, AE, AF, BC, BD, BE, BF, CD, CF, ED et EF de même longueur $\ell$, ces chemins optiques permettant la propagation des ondes lumineuses. Des réserves 1, 2, 3, 4, 5 et 6 de gaz amplificateur sont disposées contre les miroirs A, B, C, D, E et F respectivement. Le polyèdre formé par les six miroirs et les douze chemins optiques est inscrit dans un cube, chacun des miroirs étant confondu avec le centre d'une face dudit cube. Le dispositif ainsi réalisé comporte trois chemins optiques fermés ADBF, ACBE et FCDE formant respectivement trois cavités optiques en anneau X, Y et Z de même longueur L=4x $\ell$, orthogonales deux à deux. Par exemple, les miroirs B, C et D sont translatables, c'est-à-dire qu'ils sont mobiles en translation. Grâce à une commande piézoélectrique, ils peuvent être éloignés ou rapprochés du centre du polyèdre de sensiblement 1 micromètre. De cette manière, les longueurs respectives des trois cavités optiques X, Y et Z peuvent être ajustées autour de la valeur L avec une précision d'environ 0,01 micromètre. Il faut remarquer que la longueur de chacune des cavités optiques X, Y et Z dépend de la position de deux miroirs mobiles parmi B, C et D. Il faut également remarquer que la position de chacun des miroirs mobiles B, C et D conditionne la longueur de deux cavités optiques parmi X, Y et Z. Les miroirs A, E et F constituent les coupleurs de sortie : ils permettent les mesures d'intensité laser. De cette manière, les puissances respectives des ondes qui parcourent les trois cavités optiques X, Y et Z peuvent être mesurées. Une cathode 7 reliée par trois capillaires aux réserves de gaz 2, 3 et 4 et six anodes 8, 9, 10, 11, 12 et 13 permettent d'exciter le gaz amplificateur dans les cavités optiques X, Y et Z et ainsi de générer des ondes laser qui parcourent les cavités optiques X, Y et Z. Les trois cavités optiques X, Y et Z peuvent être réalisées en creusant d'abord les chemins optiques AC, AD, AE, AF, BC, BD, BE, BF, CD, CF, ED et EF dans un bloc d'un matériau caractérisé par une dilatation thermique contrôlée, par exemple le matériau zérodur® qui offre une dilatation thermique très faible. Puis les miroirs A, B, C, D, E et F ainsi que les réserves de gaz 1, 2, 3, 4, 5 et 6 peuvent être intégrés dans le bloc.

La figure 1b illustre par un synoptique les modes laser de l'une quelconque des cavités optiques X, Y ou Z du gyromètre de la figure 1a. L'axe des abscisses représente la fréquence optique. La longueur L de la cavité optique détermine les fréquences des modes laser qu'elle peut émettre : cet ensemble de fréquences est constitué d'un peigne de fréquences multiples de c/L, soit par exemple (m-2) x c/L, (m-1) x c/L, m x c/L et (m+1) x c/L où m est un entier. Au démarrage du gyromètre, la longueur de chaque cavité est ajustée pour amener un mode au plus près du maximum M du gain laser du gaz amplificateur, le spectre du gain étant représenté par une courbe parabolique $\mathcal{G}$. Sur la figure 1b par exemple, c'est le mode m correspondant à la fréquence m x c/L qui est sensiblement au maximum du gain. Après le démarrage du gyromètre, les évolutions thermiques dans le temps dues aux décharges gazeuses ou dues à l'environnement extérieur provoquent une déformation mécanique du gyromètre par dilatation/contraction. Par conséquent, les longueurs des trois cavités laser tendent à varier. Or, comme illustré par la courbe $\mathcal{G}$, les plasmas gazeux présentent un gain de faible largeur spectrale. Par conséquent, les caractéristiques optiques du gyromètre se modifient également, elles se modifient d'autant plus que l'écart du mode m par rapport au maximum M augmente. Pour conserver ses caractéristiques, le gyromètre doit donc mettre en oeuvre un dispositif autonome dit « d'accord de longueur de cavité » (ALC), qui maintient le mode m au plus près du maximum M. Dans le cas d'un gyromètre laser monoaxe avec une seule cavité laser qui contient un miroir mobile, un dispositif d'ALC peut par exemple être obtenu avec une photodiode mesurant la puissance laser émise et une électronique d'asservissement qui commande le miroir mobile pour conserver une puissance émise maximale. Dans le cas d'un gyromètre laser triaxe comme celui de la figure 1a, les trois cavités X, Y et Z se partagent les miroirs 2 à 2, notamment les miroirs mobiles B, C et D. Par conséquent, chaque cavité ne peut plus être accordée indépendamment des deux autres.

Un miroir mobile est généralement constitué d'au moins une membrane collée à un transducteur à base de céramiques piézoélectriques. Les céramiques sont usuellement commandées en tension positive et négative, commandes sous l'effet desquelles elles se déforment en entraînant la membrane. La déformation de la membrane exerce une contrainte mécanique poussant ou tirant sur le centre du miroir. Ainsi le miroir se déplace dans un sens ou dans l'autre en suivant un mouvement de translation. Par la suite, les commandes seront considérées sous forme de tensions notées $V_B$, $V_C$ et $V_D$ telles que les déplacements $L_B$ $L_C$ et $L_D$ des miroirs B, C et D respectivement sont proportionnels à ces tensions. En supposant que les trois miroirs mobiles ont exactement les mêmes caractéristiques et donc exactement le même comportement mécanique, ceci peut être synthétisé par une seule équation $L_{B,C,D} = G_{B,C,D} \times V_{B,C,D}$ où $G_{B,C,D}$ est le coefficient de gain translation/électrique des miroirs B, C et D. En réalité, $G_{B,C,D}$ est assimilable à des coefficients $G_B$, $G_c$ et $G_D$ qui peuvent chacun être positif ou négatif suivant la conception du miroir mobile et leurs valeurs peuvent également différer. Par la suite, il sera toutefois considéré que les trois miroirs mobiles B, C et D ont un coefficient de même signe et de valeur comparable, noté G, vérifiant l'équation 1 suivante :

$$L_{B,C,D} = G \times V_{B,C,D} \qquad (1)$$

Par la suite, les longueurs des cavités X, Y et Z lorsque les miroirs mobiles sont au repos, c'est-à-dire lorsque $V_{B,C,D} = 0$, seront désignées $L^0_{X,Y,Z}$. Les longueurs $L_X, L_Y$ et $L_Z$ des trois cavités sont reliées aux décalages des miroirs $L_B, L_C$ et $L_D$ selon le système d'équations

$$\begin{cases} L_X = L^0_X + L_D + L_B \\ L_Y = L^0_Y + L_B + L_C \\ L_Z = L^0_Z + L_C + L_D \end{cases},$$

ce qui revient à l'équation matricielle 2 suivante :

$$\begin{pmatrix} L_X \\ L_Y \\ L_Z \end{pmatrix} = \begin{pmatrix} L^0_X \\ L^0_Y \\ L^0_Z \end{pmatrix} + G \cdot \begin{pmatrix} 0 & 1 & 1 \\ 1 & 0 & 1 \\ 1 & 1 & 0 \end{pmatrix} \begin{pmatrix} V_C \\ V_D \\ V_B \end{pmatrix} \qquad (2)$$

Inversement, pour obtenir des cavités de longueurs $L_X, L_Y$ et $L_Z$, les tensions à fournir s'expriment selon l'équation 3 suivante :

$$\begin{bmatrix} V_C \\ V_D \\ V_B \end{bmatrix} = \frac{1}{2G} \begin{bmatrix} -1 & 1 & 1 \\ 1 & -1 & 1 \\ 1 & 1 & -1 \end{bmatrix} \left( \begin{bmatrix} L_X \\ L_Y \\ L_Z \end{bmatrix} - \begin{bmatrix} L^0_X \\ L^0_Y \\ L^0_Z \end{bmatrix} \right) \qquad (3)$$

Pour chaque cavité, le dispositif d'ALC détermine la position $L_{X,Y,Z}$ du mode laser courant par rapport à la position $L^{Max}_{X,Y,Z}$ correspondant au maximum de gain et réagit pour réduire l'écart. Par exemple, il peut être choisi de mettre en oeuvre une modulation des miroirs mobiles et une démodulation synchrone des puissances mesurées. Un signal $S_{X,Y,Z}$ proportionnel à $L_{X,Y,Z} - L_{X,Y,Z}^{Max}$ est obtenu et une valeur intégrée dans le temps

$$I_{X,Y,Z}(t) = \int_{t_0}^{t} S_{X,Y,Z}(u)\,du$$ peut être construite.

L'asservissement autonome peut alors être obtenu en générant à l'instant n+1 des tensions $V_B$, $V_C$ et $V_D$ décalées de celles à l'instant n, où n est un entier :

$$
\begin{bmatrix} V_C \\ V_D \\ V_B \end{bmatrix}_{n+1}
=
\begin{bmatrix} V_C \\ V_D \\ V_B \end{bmatrix}_{n}
- A
\begin{bmatrix} -1 & 1 & 1 \\ 1 & -1 & 1 \\ 1 & 1 & -1 \end{bmatrix}
\begin{bmatrix} S_X \\ S_Y \\ S_Z \end{bmatrix}
$$

ou, de façon équivalente, en pilotant les miroirs avec une tension :

$$
\begin{bmatrix} V_C \\ V_D \\ V_B \end{bmatrix}(t)
= - A
\begin{bmatrix} -1 & 1 & 1 \\ 1 & -1 & 1 \\ 1 & 1 & -1 \end{bmatrix}
\begin{bmatrix} I_X \\ I_Y \\ I_Z \end{bmatrix}
\qquad (4)
$$

où A désigne le coefficient de gain entre les grandeurs intégrées $I_X$, $I_Y$ et $I_Z$ et les tensions $V_B$, $V_C$ et $V_D$.

Les signaux $S_X$, $S_Y$, $S_Z$, $I_X$, $I_Y$ et $I_Z$ peuvent être échantillonnés et l'opération matricielle effectuée par logiciel. Les commandes de sortie sont alors obtenues par amplification des tensions générées par un convertisseur numérique analogique. Il est également possible de ne pas utiliser de conversion de ces signaux pour effectuer l'opération par matériel. Les commandes de sortie sont alors obtenues par amplification des tensions issues de l'opération matérielle. Dans tous les cas, le dispositif échantillonne les valeurs $I_X$, $I_Y$ et $I_Z$ pour pouvoir les surveiller.

Comme la cavité optique supporte un peigne de modes lasers séparés en fréquence de la grandeur c/L, la puissance laser varie périodiquement en fonction de L : la puissance laser passe par un maximum et un minimum chaque fois que L varie d'une longueur d'onde optique notée λ. De plus, la longueur de chaque cavité varie avec les

$$
\begin{cases}
L_X = L_X^0 + G[V_D + V_B] \\
L_Y = L_Y^0 + G[V_B + V_C] \\
L_Z = L_Z^0 + G[V_C + V_D]
\end{cases}.
$$

commandes $V_B$, $V_C$ et $V_D$. Dans l'exemple choisi, la variation s'exprime selon :

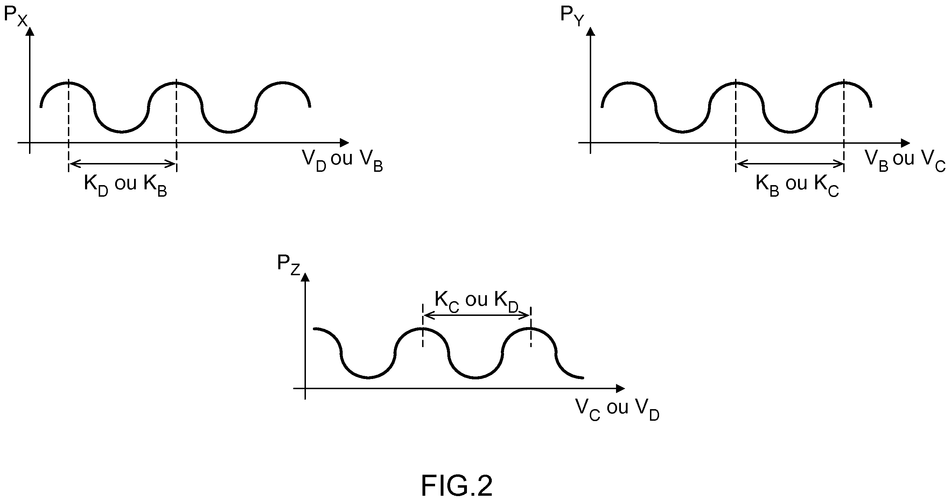

La figure 2 illustre un exemple d'évolution des puissances laser $P_X$, $P_Y$ et $P_Z$ émises par les cavités X, Y et Z respectivement en fonction des tensions de commande $V_B$, $V_C$ et $V_D$ appliquées aux miroirs B, C et D respectivement du gyromètre triaxe de la figure 1a. Par construction du gyromètre, $P_X$ ne dépend pas de $V_C$, $P_Y$ ne dépend pas de $V_D$ et $P_Z$ ne dépend pas de $V_B$. Il apparaît que finalement les variations de puissances sont périodiques avec les commandes et qu'elles présentent plusieurs maxima principaux. En effet, comme illustré par la figure 1b, si la longueur L de l'une des cavités X, Y ou Z varie continûment, alors le peigne de fréquences multiples de c/L défile par rapport au spectre du gain représenté par la courbe parabolique $\mathcal{G}$. L'intensité et donc la puissance émise par cette cavité augmente lorsqu'une fréquence multiple de c/L s'approche du maximum M, puis diminue lorsque cette fréquence multiple de c/L s'éloigne du maximum M. En d'autres termes, la puissance émise par la cavité augmente lorsqu'un mode s'approche du maximum M, puis diminue lorsque ce mode s'éloigne du maximum M. Et comme les modes rentrent et sortent du spectre du gain les uns à la suite des autres quand le peigne défile par rapport au spectre du gain, la puissance varie de manière périodique. C'est pourquoi, sur la figure 2, chacun des maxima de puissance correspond à un mode ou à une fréquence multiple de c/L. C'est ce qui explique le phénomène de « saut de mode » : en faisant varier L de manière à maximiser la puissance émise, il est possible de passer d'un mode à l'autre. Mais pour diverses raisons, les changements de mode sont à éviter en cours de fonctionnement du gyromètre. Un mode doit être choisi au démarrage du gyromètre, puis il faut s'arranger pour rester au plus près du maximum de puissance de ce mode tout au long du fonctionnement du gyromètre. Il faut toutefois noter que, d'un démarrage à l'autre du gyromètre, le mode peut être différent en fonction des conditions extérieures de température et en fonction de la position initiale des miroirs mobiles. Il faut également noter que, d'une cavité à l'autre, le mode peut être différent.

La figure 2 illustre également des grandeurs $K_B$, $K_C$ et $K_D$ qui sont les variations des commandes de tension sur les miroirs B, C et D respectivement qui permettent de changer les longueurs des cavités X, Y et Z d'une longueur optique λ. Bien que les miroirs mobiles aient sensiblement un même coefficient de gain translation/électrique G, leurs faibles différences peuvent être intégrées sur un grand déplacement de l'ordre de λ, en considérant que les grandeurs $K_B$, $K_C$ et $K_D$ peuvent varier d'un miroir à l'autre. Par contre, la géométrie de la cavité triaxe permet d'assurer que ces valeurs restent indépendantes de la cavité concernée :

$$\begin{cases} L_X + \lambda = L_X^0 + G[V_D + K_D + V_B] = L_X^0 + G[V_D + V_B + K_B] \\ L_Y + \lambda = L_Y^0 + G[V_B + K_B + V_C] = L_Y^0 + G[V_B + V_C + K_C] \\ L_Z + \lambda = L_Z^0 + G[V_C + K_C + V_D] = L_Z^0 + G[V_C + V_D + K_D] \end{cases}$$

Par la suite, les grandeurs $K_B$, $K_C$ et $K_D$ qui permettent de changer les modes longitudinaux émis par les cavités laser et qui caractérisent la dynamique des miroirs mobiles sont appelées « intermodes ».

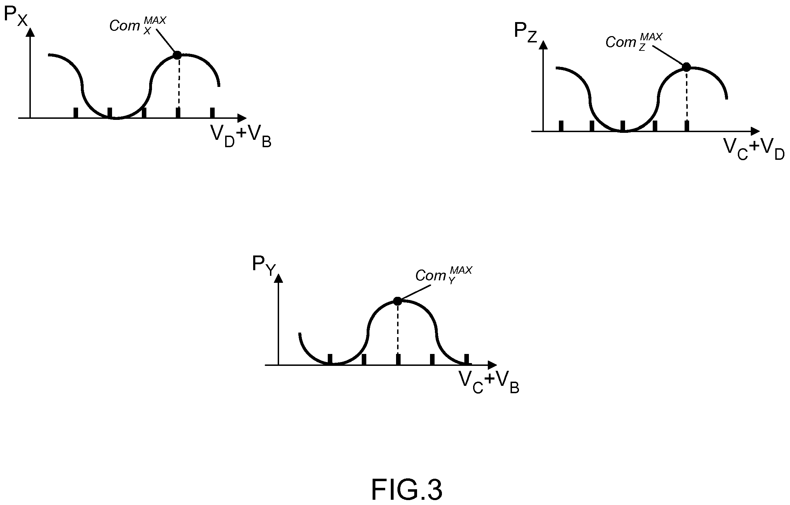

La figure 3 illustre, dans le cas où les trois miroirs mobiles B, C et D du gyromètre triaxe de la figure 1a ont un même intermode $K = K_B = K_C = K_D$, un exemple d'évolution des puissances laser émises par les trois cavités X, Y et Z en fonction de la somme des deux tensions de commande dont elles dépendent, soit $V_D + V_B$, $V_C + V_B$ et $V_C + V_D$ respectivement. Des sommes de tensions de commande $Com_X^{Max}$, $Com_Y^{Max}$ et $Com_Z^{Max}$ permettent d'obtenir une puissance maximum émise par les cavités X, Y et Z respectivement.

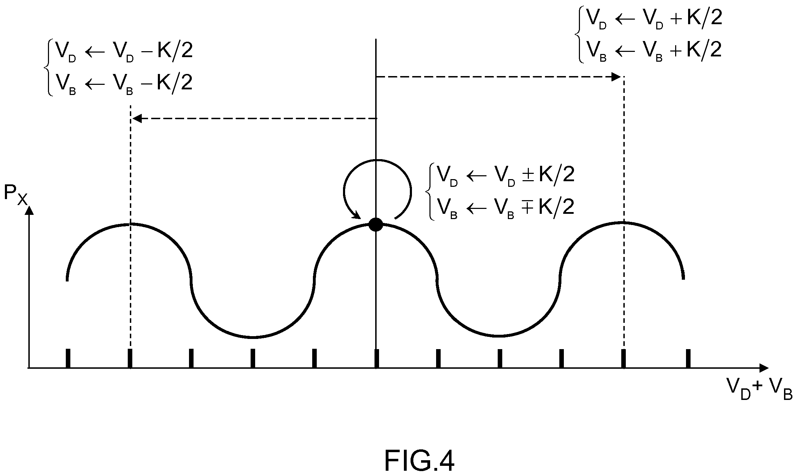

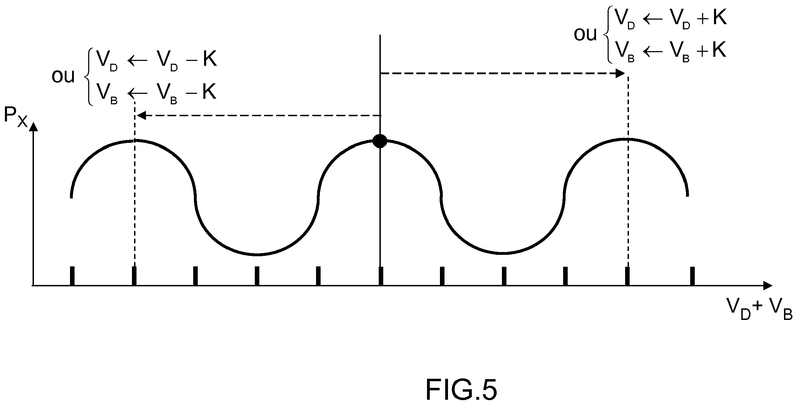

Les figures 4 et 5 illustrent deux propriétés des cavités X, Y et Z de même intermode K du gyrolaser triaxe de la figure 1a, par l'intermédiaire d'un exemple d'évolution de la puissance laser émise par la cavité X en fonction de la somme des deux tensions de commande dont elle dépend, soit $V_D + V_B$. La première propriété est que les trois cavités restent toutes sur un maximum de gain lorsque toutes les tensions piézoélectriques sont changées d'un demi-intermode K/2. Cette première propriété est illustrée par la figure 4 en ce qui concerne la cavité X. La deuxième propriété est que les trois cavités restent toutes sur un maximum de gain lorsqu'une seule des tensions de commande piézoélectrique est changée d'un intermode complet K. Cette deuxième propriété est illustrée par la figure 5 en ce qui concerne la cavité X.

L'invention propose de modifier la génération du signal qui pilote le déplacement des miroirs mobiles au démarrage d'un gyromètre laser triaxe, de sorte à disposer d'une commande de décalage programmable et indépendante de l'ALC autonome. Il faut noter que l'invention s'applique également à tout dispositif comportant des cavités optiques en anneau, tant que la puissance des ondes lumineuses parcourant lesdites cavités optiques dépendent de la position de miroirs mobiles. Le gyromètre laser n'est donné qu'à titre d'exemple. L'invention propose également de disposer d'informations dans la chaîne de commande des miroirs de manière à pouvoir remonter à leur position lorsque l'asservissement autonome opère. Un capteur de température peut être employé pour estimer la température du gyrolaser, comme une thermistance ou un thermocouple par exemple. Un principe de l'invention est de piloter les commandes en suivant une rampe linéaire ou un profil plus complexe pour repérer les maxima de puissance simultanément sur les trois cavités laser, de façon à pouvoir ensuite positionner simultanément les trois miroirs mobiles aux positions qui satisfont le plus avantageusement les critères de fonctionnement choisis. Par exemple, dans le cas du gyromètre de la figure 1a, le pilotage des miroirs suivant l'équation 4 peut être modifié en incorporant des commandes de décalage $D_X$, $D_Y$ et $D_Z$ selon l'équation 5 suivante :

$$\begin{bmatrix} V_C \\ V_D \\ V_B \end{bmatrix} = -A \begin{bmatrix} -1 & 1 & 1 \\ 1 & -1 & 1 \\ 1 & 1 & -1 \end{bmatrix} \left( \begin{bmatrix} I_X \\ I_Y \\ I_Z \end{bmatrix} + \begin{bmatrix} D_X \\ D_Y \\ D_Z \end{bmatrix} \right) \qquad (5)$$

Les valeurs $I_X$, $I_Y$ et $I_Z$ peuvent être annulées artificiellement et les commandes $D_X$, $D_Y$ et $D_Z$ peuvent être pilotées par logiciel. Le dispositif dispose d'un échantillonnage des valeurs $I_X$, $I_Y$ et $I_Z$ afin de pouvoir les surveiller. Avec la commande précédente où les entrées $I_X$, $I_Y$ et $I_Z$ sont artificiellement annulées, les signaux de commande des miroirs mobiles $V_B$, $V_C$ et $V_D$ s'expriment alors en fonction des commandes logicielles $D_X$, $D_Y$ et $D_Z$ :

$$\begin{bmatrix} V_C \\ V_D \\ V_B \end{bmatrix} = -A \begin{bmatrix} -1 & 1 & 1 \\ 1 & -1 & 1 \\ 1 & 1 & -1 \end{bmatrix} \begin{bmatrix} D_X \\ D_Y \\ D_Z \end{bmatrix} \qquad (6)$$

Une variation des commandes $D_X$, $D_Y$ et $D_Z$ permet d'obtenir un pilotage des miroirs mobiles (suivant une rampe linéaire ou un profil plus complexe) et de balayer simultanément chacune des trois cavités sur au moins un mode. Pour chaque valeur des commandes de décalage, les puissances laser émises par les trois cavités peuvent être acquises. Les valeurs $D_X^{Max}$, $D_Y^{Max}$ et $D_Z^{Max}$ pour lesquelles les intensités émises sont maximales respectivement pour les cavités X,Y et Z peuvent alors être mémorisées. A l'issue du balayage, il suffit d'affecter aux commandes de décalage les valeurs $D_X^{Max}$, $D_Y^{Max}$ et $D_Z^{Max}$ mémorisées pour positionner les trois miroirs mobiles au plus près des maxima de puissance simultanément pour les trois cavités. L'équation 7 donne les valeurs finales $V_B^{final}$, $V_C^{final}$, $V_D^{final}$ obtenues pour les commandes des miroirs :

$$\begin{cases} V_B^{final} = A\left[-D_X^{Max} - D_Y^{Max} + D_Z^{Max}\right] \\ V_C^{final} = A\left[D_X^{Max} - D_Y^{Max} - D_Z^{Max}\right] \\ V_D^{final} = A\left[-D_X^{Max} + D_Y^{Max} - D_Z^{Max}\right] \end{cases} \qquad (7)$$

Inversement dans cet exemple, les valeurs des commandes logicielles $D_X$, $D_Y$ et $D_Z$ à générer pour obtenir les valeurs $V_B$, $V_C$ et $V_D$ des commandes de translation s'expriment :

$$\begin{bmatrix} D_X \\ D_Y \\ D_Z \end{bmatrix} = \frac{-1}{2A}\begin{bmatrix} 0 & 1 & 1 \\ 1 & 0 & 1 \\ 1 & 1 & 0 \end{bmatrix}\begin{bmatrix} V_C \\ V_D \\ V_B \end{bmatrix} \qquad (8)$$

Cet exemple ne restreint pas la méthode requise pour le pilotage des miroirs mobiles. Toute technique correspondant à une bijection entre la commande de décalage et la commande reçue par les miroirs convient : il suffit de pouvoir programmer un balayage indépendant pour chaque miroir et qu'ensuite chacun puisse être placé sur une position finale calculée. Un deuxième exemple de modification du pilotage par des commandes de décalage $D'_C$, $D'_D$ et $D'_B$ est donné ci-dessous, qui permet une séquence de balayage des miroirs et un positionnement ultérieur différencié pour chacun :

$$\begin{bmatrix} V_C \\ V_D \\ V_B \end{bmatrix} = -A\begin{bmatrix} -1 & 1 & 1 \\ 1 & -1 & 1 \\ 1 & 1 & -1 \end{bmatrix}\begin{bmatrix} I_X \\ I_Y \\ I_Z \end{bmatrix} + \begin{bmatrix} D'_C \\ D'_D \\ D'_B \end{bmatrix} \qquad (9)$$

avec la capacité d'annuler artificiellement les valeurs $I_x$, $I_Y$ et $I_Z$ et de piloter par logiciel les commandes $D'_C$, $D'_D$ et $D'_B$.

L'invention propose également de pouvoir déterminer la position des miroirs lorsque l'asservissement autonome opère. Dans le premier exemple donné par l'équation 5, les commandes des miroirs peuvent être déterminées par une mesure des valeurs $V_B$, $V_C$ et $V_D$ générées ou à partir des valeurs $I_{X,Y,Z} + D_{X,Y,Z}$ qui peuvent être mesurées indépendamment ou connues directement dans le cas d'opérations effectuées par logiciel. Dans le cas du deuxième exemple de commandes des miroirs mobiles illustré par l'équation 9, les commandes des miroirs peuvent aussi être déterminées par une mesure des valeurs $V_B$, $V_C$ et $V_D$ générées. Elles peuvent également être estimées à partir des valeurs $I_X$, $I_Y$ et $I_Z$ ainsi que $D'_C$, $D'_D$ et $D'_B$ mesurées indépendamment ou connues directement dans le cas d'opérations effectuées par logiciel. La quantité A peut être supposée une constante connue ou elle peut être extraite d'une table faisant correspondre des valeurs de A à des valeurs de température par exemple. Le balayage initial n'est pas restreint à une rampe linéaire mais peut avoir une forme plus complexe pour améliorer le positionnement en termes de précision, de reproductibilité ou encore de rapidité. Le positionnement final des miroirs mobiles peut être choisi parmi plusieurs possibilités pour améliorer le positionnement, pour tenir compte des particularités de chaque miroir, pour influencer leur comportement ou encore pour compenser certains effets.

Une configuration qui peut être envisagée correspond au cas où les trois miroirs mobiles B, C et D auraient un même intermode $K = K_B = K_C = K_D$. Il s'agit de montrer comment il est possible d'obtenir un balayage des trois miroirs dans une même plage pour les positionner dans un intervalle également identique et au plus proche du maximum d'intensité des trois cavités. Pour balayer un mode d'une cavité laser choisie, il suffit d'appliquer sur l'un des deux miroirs mobiles une variation de sa commande de la valeur K, par exemple un balayage de la commande de ±K/2 autour d'une valeur moyenne. En balayant simultanément les deux miroirs mobiles de cette cavité, il suffit d'appliquer pour chacun une variation de ±K/4. De cette façon, un balayage simultané des trois miroirs mobiles sur une variation de ±K/4 autour d'une valeur moyenne permet de balayer sur un mode les trois cavités du gyromètre laser triaxe.

Pour le premier exemple de commande des miroirs présenté, l'équation 8 montre que les trois miroirs mobiles effectuent un balayage sur ±K/4, c'est-à-dire $V_{B,C,D} = V_{B,C,D}^0 \pm K/4$ si les commandes $D_X$, $D_Y$ et $D_Z$ explorent les intervalles donnés par l'équation 10 suivante :

$$\begin{cases} D_X = \dfrac{-1}{2A}\left[V_D^0 + V_B^0 \pm \dfrac{K}{2}\right] = D_X^0 \mp \dfrac{K}{4A} \\[2mm] D_Y = \dfrac{-1}{2A}\left[V_B^0 + V_C^0 \pm \dfrac{K}{2}\right] = D_Y^0 \mp \dfrac{K}{4A} \\[2mm] D_Z = \dfrac{-1}{2A}\left[V_C^0 + V_D^0 \pm \dfrac{K}{2}\right] = D_Z^0 \mp \dfrac{K}{4A} \end{cases} \tag{10}$$

Il suffit ensuite de mémoriser les valeurs des commandes $D_X^{Max}$, $D_Y^{Max}$ et $D_Z^{Max}$ pour lesquelles les intensités respectives des cavités X, Y et Z sont maximales. Les valeurs finales des commandes des miroirs mobiles $V_B^{final}$, $V_C^{final}$, $V_D^{final}$ pour lesquelles les trois cavités seront simultanément proches de leur maximum sont obtenues conformément à l'équation 11 suivante :

$$\begin{cases} V_B^{final} = A\left[-D_X^{Max} - D_Y^{Max} + D_Z^{Max}\right] \\[2mm] V_C^{final} = A\left[D_X^{Max} - D_Y^{Max} - D_Z^{Max}\right] \\[2mm] V_D^{final} = A\left[-D_X^{Max} + D_Y^{Max} - D_Z^{Max}\right] \end{cases} \tag{11}$$

Les équations 10 et 11 permettent de déterminer les intervalles dans lesquels les commandes $V_B^{final}$, $V_C^{final}$, $V_D^{final}$ se retrouvent, ce qui donne l'équation 12 :

$$\begin{cases} V_B^{final} = A\dfrac{1}{2A}\left[2V_B^0 \pm 3K/2\right] = A\left[-D_X^0 - D_Y^0 + D_Z^0\right] \pm 3K/4 = V_B^0 \pm 3K/4 \\[2mm] V_C^{final} = A\dfrac{1}{2A}\left[2V_C^0 \pm 3K/2\right] = A\left[D_X^0 - D_Y^0 - D_Z^0\right] \pm 3K/4 = V_C^0 \pm 3K/4 \\[2mm] V_D^{final} = A\dfrac{1}{2A}\left[2V_D^0 \pm 3K/2\right] = A\left[-D_X^0 + D_Y^0 - D_Z^0\right] \pm 3K/4 = V_D^0 \pm 3K/4 \end{cases} \tag{12}$$

Les commandes calculées pour amener simultanément les trois cavités au voisinage de leur maximum d'intensité se retrouvent automatiquement dans un intervalle centré autour de la même valeur $V^0_{B,C,D}$ que lors du balayage mais d'amplitude plus grande $\pm 3K/4$. Pour le deuxième exemple de commandes, l'équation 9 conduit au même résultat.

Finalement, en choisissant de piloter les commandes dans un même intervalle, les miroirs mobiles balayent simultanément une plage identique $\left[ V^0_{B,C,D} - \dfrac{K}{4}; V^0_{B,C,D} + \dfrac{K}{4} \right]$ et sont ensuite positionnés simultanément dans le même intervalle $\left[ V^0_{B,C,D} - \dfrac{3K}{4}; V^0_{B,C,D} + \dfrac{3K}{4} \right]$ avec $V^0_B = V^0_C = V^0_D = -A D^0_X$. La précision du positionnement final est déterminée par un compromis entre la réduction du pas du balayage, le niveau du bruit dans les mesures de puissances et le nombre de répétition d'acquisition à chaque point. Ce pilotage des miroirs mobiles améliore la détermination du positionnement initial des miroirs mobiles : la séquence et le pilotage permettent d'avoir un positionnement rapide et à coup sûr au maximum du gain laser simultanément pour les trois cavités.

Toujours dans le cas où les trois miroirs mobiles B, C et D auraient un même intermode, après avoir montré comment il est possible d'obtenir un balayage des trois miroirs dans une même plage pour les positionner dans un intervalle également identique et au plus proche d'un maximum d'intensité des trois cavités, il s'agit maintenant de montrer comment il est possible d'obtenir un balayage et un positionnement dans un intervalle propre à chaque miroir mobile tout en amenant simultanément les trois cavités au plus proche d'un maximum d'intensité.

Dans le premier exemple, l'équation 6 indique qu'en choisissant bien les plages explorées par les commandes $D_{X,Y,Z} = D^0_{X,Y,Z} \mp \dfrac{K}{4A}$ avec $D^0_X \neq D^0_Y \neq D^0_Z \neq D^0_X$, les intervalles balayés par les miroirs mobiles peuvent être différenciés conformément à l'équation 13 suivante :

$$\begin{bmatrix} V_C \\ V_D \\ V_B \end{bmatrix} = -A \begin{bmatrix} -1 & 1 & 1 \\ 1 & -1 & 1 \\ 1 & 1 & -1 \end{bmatrix} \begin{bmatrix} D^0_X \mp \dfrac{K}{4A} \\ D^0_Y \mp \dfrac{K}{4A} \\ D^0_Z \mp \dfrac{K}{4A} \end{bmatrix} = \begin{bmatrix} A\left( +D^0_X - D^0_Y - D^0_Z \right) \\ A\left( -D^0_X + D^0_Y - D^0_Z \right) \\ A\left( -D^0_X - D^0_Y + D^0_Z \right) \end{bmatrix} \pm \begin{bmatrix} K/4 \\ K/4 \\ K/4 \end{bmatrix} \qquad (13)$$

Les miroirs balayent alors des plages centrées autour de valeurs distinctes $V^0_B$, $V^0_C$, $V^0_D$ données par

$$\begin{cases} V^0_B = A\left[ -D^0_X - D^0_Y + D^0_Z \right] \\ V^0_C = A\left[ D^0_X - D^0_Y - D^0_Z \right] \\ V^0_D = A\left[ -D^0_X + D^0_Y - D^0_Z \right] \end{cases}$$

mais avec une même amplitude $\pm K/4$. Comme précédemment, il suffit ensuite de mémoriser les valeurs des commandes $D^{Max}_X$, $D^{Max}_Y$ et $D^{Max}_Z$ pour lesquelles les intensités respectives des cavités X, Y et Z sont maximales. Les valeurs finales des commandes des miroirs mobiles $V^{final}_B$, $V^{final}_C$, $V^{final}_D$ pour lesquelles les trois cavités seront simultanément proches de leur maximum correspondent comme précédemment à

$$\begin{cases} V^{final}_B = A\left[ -D^{Max}_X - D^{Max}_Y + D^{Max}_Z \right] \\ V^{final}_C = A\left[ D^{Max}_X - D^{Max}_Y - D^{Max}_Z \right] \\ V^{final}_D = A\left[ -D^{Max}_X + D^{Max}_Y - D^{Max}_Z \right] \end{cases}.$$

L'équation 12 montre que les commandes $D^{Max}_X$, $D^{Max}_Y$ et $D^{Max}_Z$ amenant simultanément les trois cavités au voisinage de leur maximum d'intensité conduisent automatiquement les miroirs mobiles dans un intervalle centré autour de la même valeur que lors du balayage centré sur $V_B^0,\ V_C^0,\ V_D^0$ mais d'amplitude plus grande $\pm\,3K/4$. Le deuxième exemple de commandes des miroirs mobiles conduit au même résultat via l'équation 9.

Finalement, en choisissant de piloter les commandes dans des intervalles différents, les miroirs mobiles peuvent balayer simultanément des plages distinctes $\left[V_{B,C,D}^0 - \dfrac{K}{4}\,;\,V_{B,C,D}^0 + \dfrac{K}{4}\right]$ et être ensuite positionnés simultanément dans des intervalles propres $\left[V_{B,C,D}^0 - \dfrac{3K}{4}\,;\,V_{B,C,D}^0 + \dfrac{3K}{4}\right]$, avec $\begin{cases} V_B^0 = A\left[-D_X^0 - D_Y^0 + D_Z^0\right] \\ V_C^0 = A\left[D_X^0 - D_Y^0 - D_Z^0\right] \\ V_D^0 = A\left[-D_X^0 + D_Y^0 - D_Z^0\right] \end{cases}$. La précision du positionnement final est également déterminée par un compromis entre le pas du balayage dont la précision peut être accrue en augmentant le nombre de points échantillonnés le long du balayage, le niveau du bruit dans les mesures de puissances et le nombre de répétition d'acquisition à chaque point. En effet, répéter les acquisitions en un même point permet de réduire la contribution du bruit mais augmente la durée totale du balayage. Ce pilotage des miroirs mobiles améliore encore la détermination du positionnement des miroirs mobiles : la séquence et le pilotage permettent d'avoir un positionnement rapide, personnalisable en fonction du miroir mobile et à coup sûr au maximum du gain laser simultanément pour les trois cavités. Le choix des plages de balayage et de positionnement en fonction de la température initiale peuvent permettre d'anticiper des variations de comportement des miroirs mobiles.

Toujours dans le cas où les trois miroirs mobiles B, C et D auraient un même intermode, après avoir montré comment il est possible d'obtenir un balayage des trois miroirs mobiles dans des intervalles identiques ou propres à chacun, en les plaçant simultanément au plus proche du maximum d'intensité de leur cavité puis en les commandant dans des intervalles de $\pm 3K/4$ autour d'une valeur moyenne $\left[V_{B,C,D}^0 - \dfrac{3K}{4}\,;\,V_{B,C,D}^0 + \dfrac{3K}{4}\right]$, il s'agit maintenant de montrer comment il est possible de réduire ces domaines à une plage $\pm K/2$. Une étude des cavités triaxes montre que lorsqu'une commande de tension en extrémité de plage est atteinte, les deux autres commandes se retrouvent du côté opposé. Cette propriété des positionnements des maxima pour les cavités triaxes est illustrée dans le cas du miroir B par les deux assertions suivantes :

$$V_B^{final} > V_B^0 + K/2 \Rightarrow \begin{cases} V_C^{final} \in \left[V_C^0 - K/2\,;\,V_C^0\right] \\ V_D^{final} \in \left[V_D^0 - K/2\,;\,V_D^0\right] \end{cases}$$

$$V_B^{final} < V_B^0 - K/2 \Rightarrow \begin{cases} V_C^{final} \in \left[V_C^0\,;\,V_C^0 + K/2\right] \\ V_D^{final} \in \left[V_D^0\,;\,V_D^0 + K/2\right] \end{cases}$$

Quatre autres assertions équivalentes peuvent être obtenues par permutation circulaire entre les miroirs.

L'invention propose notamment d'utiliser la première propriété des cavités laser triaxe illustrée par la figure 4 pour décaler toutes les commandes des miroirs en maintenant les cavités à proximité d'un maximum de gain. En décalant le miroir en extrémité de plage d'un demi-intermode pour le ramener vers une valeur médiane et en compensant la commande des deux autres d'un demi-intermode dans la direction opposée, deux cavités sont maintenues sur le même mode et la troisième saute d'un mode.

Chacune des opérations suivantes peut donc avantageusement permettre de re-centrer les commandes en maintenant deux cavités sur le même mode et en faisant sauter d'un mode la troisième, conformément au Tableau 1 :

**Tableau 1**

| | | |
|---|---|---|
| $\begin{cases} VP_C \leftarrow VP_C - K/2 \\ VP_D \leftarrow VP_D + K/2 \\ VP_B \leftarrow VP_B + K/2 \end{cases}$ | $\begin{cases} VP_C \leftarrow VP_C + K/2 \\ VP_D \leftarrow VP_D - K/2 \\ VP_B \leftarrow VP_B + K/2 \end{cases}$ | $\begin{cases} VP_C \leftarrow VP_C + K/2 \\ VP_D \leftarrow VP_D + K/2 \\ VP_B \leftarrow VP_B - K/2 \end{cases}$ |
| $\begin{cases} VP_C \leftarrow VP_C + K/2 \\ VP_D \leftarrow VP_D - K/2 \\ VP_B \leftarrow VP_B - K/2 \end{cases}$ | $\begin{cases} VP_C \leftarrow VP_C - K/2 \\ VP_D \leftarrow VP_D + K/2 \\ VP_B \leftarrow VP_B - K/2 \end{cases}$ | $\begin{cases} VP_C \leftarrow VP_C - K/2 \\ VP_D \leftarrow VP_D - K/2 \\ VP_B \leftarrow VP_B + K/2 \end{cases}$ |
| Re-centrage pour le miroir C en extrémité | Re-centrage pour le miroir D en extrémité | Re-centrage pour le miroir B en extrémité |

Ayant calculé les commandes des miroirs dans l'intervalle ±3K/4 à l'issue du balayage et lorsque l'une des valeurs sort de l'intervalle ±K/2, la modification des commandes proposée peut permettre de redéfinir des valeurs dans l'intervalle ±K/2, ces valeurs amenant simultanément les trois cavités au plus proche de leur maximum de gain.

L'invention propose également d'utiliser la deuxième propriété des cavités laser triaxe illustrée par la figure 5 pour décaler la commande d'un seul miroir en maintenant toutes les cavités à proximité d'un maximum de gain. En décalant le miroir en extrémité de plage d'un intermode complet, il est ramené vers la valeur médiane de l'intervalle. Chacune des opérations suivantes peut donc avantageusement permettre de décaler la commande d'un miroir en maintenant une cavité sur le même mode et en faisant sauter d'un mode les deux autres, conformément au Tableau 2 :

**Tableau 2**

| | | |
|---|---|---|
| $\begin{cases} VP_C \leftarrow VP_C \pm K \\ VP_D \leftarrow VP_D \\ VP_B \leftarrow VP_B \end{cases}$ | $\begin{cases} VP_C \leftarrow VP_C \\ VP_D \leftarrow VP_D \pm K \\ VP_B \leftarrow VP_B \end{cases}$ | $\begin{cases} VP_C \leftarrow VP_C \\ VP_D \leftarrow VP_D \\ VP_B \leftarrow VP_B \pm K \end{cases}$ |
| Re-centrage pour le miroir C en extrémité | Re-centrage pour le miroir D en extrémité | Re-centrage pour le miroir B en extrémité |

Ayant calculé les commandes des miroirs dans l'intervalle ±3K/4 à l'issue du balayage et lorsque l'une des valeurs sort de l'intervalle ±K/2, la modification d'une commande proposée peut permettre de redéfinir des valeurs du même côté de l'intervalle.

Finalement, après le balayage des miroirs et la détermination des commandes amenant simultanément les trois cavités laser au plus proche d'un maximum de gain, les opérations présentées précédemment permettent de réduire le domaine des valeurs possibles. Ces modifications permettent de favoriser un comportement permettant de réduire les contraintes mécaniques dans les composants des miroirs mobiles comme les disques déformables ou les joints de colle, et par conséquent d'augmenter la fiabilité de l'ensemble constituant le miroir mobile.

Après avoir montré comment il est possible, lorsque les trois miroirs mobiles ont un même intermode, de faire balayer leurs positions pour les positionner dans des intervalles propres à chacun tout en les plaçant simultanément au plus proche du maximum d'intensité des trois cavités, les miroirs mobiles étant finalement commandés dans des intervalles de mêmes amplitudes ±3$K$/4 autour d'une valeur moyenne $\left[ V_{B,C,D}^0 - \dfrac{3K}{4} ; V_{B,C,D}^0 + \dfrac{3K}{4} \right]$ propre à chacun, il s'agit maintenant d'envisager le cas où les trois miroirs mobiles B, C et D ont des intermodes différents notés $K_B$, $K_C$ et $K_D$. Il est possible d'obtenir un balayage des miroirs mobiles dans des intervalles de centres et d'amplitudes propres à chaque miroir et de les positionner ensuite au plus proche d'un maximum de gain. Chaque cavité X, Y et Z peut toujours être balayée sur un mode complet si les trois miroirs mobiles sont simultanément déplacés de $\pm K_{B,C,D}/4$

respectivement, selon l'équation $V_{B,C,D} = V_{B,C,D}^0 \pm K_{B,C,D}/4$ . L'équation 10 n'est plus applicable, mais l'équation 8 montre que ces balayages peuvent être obtenus lorsque les commandes de décalage $D_X$, $D_Y$ et $D_Z$ explorent les intervalles 14 suivants :

$$\begin{cases} D_X = \dfrac{-1}{2A}\left[V_D^0 + V_B^0 \pm \dfrac{K_X}{2}\right] = D_X^0 \mp \dfrac{K_X}{4A} \\[3mm] D_Y = \dfrac{-1}{2A}\left[V_B^0 + V_C^0 \pm \dfrac{K_Y}{2}\right] = D_Y^0 \mp \dfrac{K_Y}{4A} \\[3mm] D_Z = \dfrac{-1}{2A}\left[V_C^0 + V_D^0 \pm \dfrac{K_Z}{2}\right] = D_Z^0 \mp \dfrac{K_Z}{4A} \end{cases} \qquad (14)$$

où $K_X$, $K_Y$ et $K_Z$ sont donnés par les équations 15 suivantes :

$$\begin{cases} K_X = (K_D + K_B)/2 \\[2mm] K_Y = (K_B + K_C)/2 \\[2mm] K_Z = (K_C + K_D)/2 \end{cases} \qquad (15)$$

En notant $\overline{K} = (K_B + K_C + K_D)/3$, il peut être obtenu $K_X + K_Y + K_Z = K_B + K_C + K_D = 3\overline{K}$. Lors du balayage, il suffit de mémoriser les valeurs des commandes $D_X^{Max}$, $D_Y^{Max}$ et $D_Z^{Max}$ pour lesquelles les intensités respectives des cavités X, Y et Z sont maximales. Les valeurs finales des commandes des miroirs mobiles $V_B^{final}$, $V_C^{final}$ et $V_D^{final}$ pour lesquelles les trois cavités seront simultanément proches de leur maximum sont données par les équations 16 suivantes :

$$\begin{cases} V_B^{final} = A\left[-D_X^{Max} - D_Y^{Max} + D_Z^{Max}\right] = A\dfrac{1}{2A}\left(2V_B^0 \pm 3\overline{K}/2\right) = V_B^0 \pm 3\overline{K}/4 \\[3mm] V_C^{final} = A\left[D_X^{Max} - D_Y^{Max} - D_Z^{Max}\right] = A\dfrac{1}{2A}\left(2V_C^0 \pm 3\overline{K}/2\right) = V_C^0 \pm 3\overline{K}/4 \\[3mm] V_D^{final} = A\left[-D_X^{Max} + D_Y^{Max} - D_Z^{Max}\right] = A\dfrac{1}{2A}\left(2V_D^0 \pm 3\overline{K}/2\right) = V_D^0 \pm 3\overline{K}/4 \end{cases} \qquad (16)$$

Les valeurs des commandes miroirs amenant simultanément les trois cavités à proximité d'un maximum de gain se retrouvent donc automatiquement dans des intervalles dont les centres $V_B^0$, $V_C^0$ et $V_D^0$ sont propres au miroir mais avec une même amplitude $\pm 3\overline{K}/4$ calculée sur la moyenne des intermodes des trois miroirs. L'exemple de commande des miroirs mobiles illustré par l'équation 9 conduit aux mêmes résultats. Les commandes peuvent donc être pilotées dans des intervalles de centres et d'amplitudes différentes et les miroirs mobiles ensuite positionnés simultanément dans des intervalles propres, de centres distincts mais de même largeur. Cette méthode ne permet pas de réduire la plage de solution pour le miroir de plus faible intermode. C'est la procédure de recentrage pouvant ensuite être effectuée qui peut ramener les commandes des miroirs dans une plage d'amplitude égale à leur intermode.

Il a été montré précédemment que lorsque les trois miroirs mobiles ont un même intermode, il est possible de les positionner simultanément au plus proche du maximum d'intensité des trois cavités dans des plages qui peuvent être réduites à une amplitude $\pm K/2$. Il s'agit maintenant d'envisager le cas où les trois miroirs mobiles ont des intermodes différents. Il a été montré qu'alors, les miroirs mobiles sont positionnés simultanément dans des intervalles de centres distincts mais de même amplitude $\pm \overline{K}/2$. Il peut être montré qu'il est possible de réduire le domaine de positionnement final de chaque miroir en tenant compte de son intermode propre. Le pilotage des miroirs suivant l'un ou l'autre des deux exemples présentés aboutit à modifier la propriété de positionnement des maxima. Lorsqu'une commande de tension en extrémité de plage est atteinte, les deux autres commandes se retrouvent décalées en direction du côté opposé. Cette propriété des positionnements des maxima pour les cavités triaxes avec des intermodes distincts est illustrée dans le cas du miroir B par les deux assertions suivantes :

$$V_B^{final} > V_B^0 + K_B/2 \Rightarrow \begin{cases} V_C^{final} \in \left[ V_C^0 - \left(2K_D + K_C - K_B\right)/4 \,;\, V_C^0 + \left(K_C - K_B\right)/4 \right] \\ V_D^{final} \in \left[ V_D^0 - \left(2K_C + K_D - K_B\right)/4 \,;\, V_D^0 + \left(K_D - K_B\right)/4 \right] \end{cases}$$

$$V_B^{final} < V_B^0 - K_B/2 \Rightarrow \begin{cases} V_C^{final} \in \left[ V_C^0 - \left(K_C - K_B\right)/4 \,;\, V_C^0 + \left(2K_D + K_C - K_B\right)/4 \right] \\ V_D^{final} \in \left[ V_D^0 - \left(K_D - K_B\right)/4 \,;\, V_D^0 + \left(2K_C + K_D - K_B\right)/4 \right] \end{cases}$$

Quatre autres assertions équivalentes peuvent être obtenues par permutation circulaire entre les miroirs. Une commande telle que $V_B^{final} > V_B^0 + K_B/2$ tend donc à décaler du côté inférieur de leur plage les valeurs $V_C^{final}$ et $V_D^{final}$ qui peuvent au plus faiblement dépasser respectivement $V_C^0$ et $V_D^0$. Il est donc toujours possible d'effectuer un re-centrage de sorte à diminuer d'un demi-intermode $K_B/2$ la commande $V_B^{final}$ et augmenter les deux autres commandes d'un demi de leur propre intermode. Ces opérations peuvent alors conduire les commandes $V_C$ et $V_D$ à sortir un peu de l'intervalle $\left[ V_{C,D}^0 - K_{C,D}/2 \,;\, V_{C,D}^0 + K_{C,D}/2 \right],$ mais elles permettent de réduire le domaine de positionnement final de chaque miroir en tenant compte de son intermode propre. La séquence de pilotage proposée permet de cette façon de prendre en compte le comportement dynamique de chacun des miroirs mobiles.

Pour des miroirs d'intermodes distincts, il est donc possible d'obtenir un balayage dans des intervalles de centres et d'amplitudes propres à chacun et de les positionner ensuite simultanément au plus proche d'un maximum de gain. Cette méthode ne permet cependant pas de réduire la plage de solution pour le miroir de plus faible intermode. Dans le cas d'une cavité dont les miroirs présentent des intermodes différents, la plus grande des valeurs peut également être caractérisée préalablement. En balayant les trois miroirs mobiles sur l'amplitude correspondante, il est certain que chaque cavité passe par un maximum de gain qui peut être repéré.

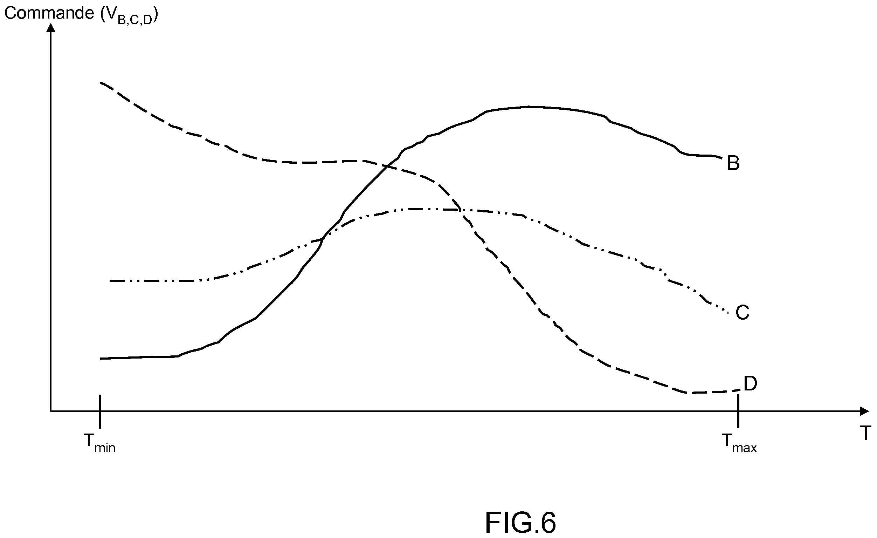

Il s'agit maintenant de montrer que l'invention proposée permet de prendre en compte le comportement thermique de chacun des miroirs mobiles dans leur positionnement au démarrage du gyrolaser. Une fois le gyrolaser démarré, l'environnement dans lequel il est utilisé peut apporter d'importantes variations thermiques. Sous ces variations de températures, le bloc optique ainsi que les mécaniques de fixation se déforment et induisent une variation des longueurs optiques des cavités lasers. L'électronique d'asservissement autonome maintient les périmètres des cavités constants et au maximum de gain en ajustant les valeurs des commandes des miroirs mobiles. Par la suite, on appellera « comportement thermique » d'un miroir mobile la variation de sa commande due à l'asservissement autonome lorsque le gyrolaser est maintenu en fonctionnement et subit une variation thermique égale à son domaine d'utilisation complet. La figure 6 illustre par un graphe les variations de commande des miroirs B, C et D observables en fonction d'un gradient thermique positif. Le miroir B présente une grande variation positive : sa commande est globalement croissante avec un maximum global éventuellement en dessous de la température maximale. Le miroir D montre une grande variation négative : sa commande est globalement décroissante avec un minimum éventuellement en dessous de la température maximale. Le miroir C a une faible variation : sa commande présente un extremum au milieu de la plage de température, qui peut être un maximum comme illustré par la figure 6 mais tout aussi bien un minimum. Finalement, lors des variations thermiques, le jeu des contraintes entre les mécaniques de fixation, le bloc et ses composants notamment les miroirs mobiles eux-mêmes, provoque une variation des commandes qui doivent pourtant rester dans leur domaine de validité pour que l'asservissement autonome reste opérant. L'invention peut notamment permettre d'utiliser l'information d'un capteur de température pour adapter la plage de balayage et de positionnement de chaque miroir mobile lors de la séquence. Une caractérisation préliminaire peut permettre d'évaluer les comportements thermiques de chaque miroir. Des seuils de température peuvent alors être déterminés, soit par un compromis entre les caractéristiques des miroirs, soit par un compromis plus général autour du gyrolaser, ces seuils pouvant être stockés dans des tables. Il peut ensuite être défini, pour chaque miroir et pour chaque seuil de température de démarrage, une variation positive ΔVpos possible sur sa commande et une variation négative ΔVnég. Une plage de positionnement possible de chaque miroir peut être choisie, en sélectionnant son centre de manière qu'il reste dans le domaine de validité de l'asservissement autonome. L'invention peut ainsi permettre de prendre en compte le comportement thermique et dynamique de chacun des miroirs mobiles. L'invention peut également permettre de favoriser l'orientation du déplacement de chacun des miroirs. La plage de positionnement peut être choisie pour favoriser une commande telle que le mécanisme de translation pousse le miroir plus souvent qu'il ne le tire. Le dispositif peut également permettre de favoriser un fonctionnement en tirant ou un fonctionnement centré autour d'une valeur prédéterminée. L'invention peut aussi permettre de réduire la variation totale des commandes lors du fonctionnement et donc de réduire le domaine de commande requis. Dans le cas où les miroirs sont commandés en tension, l'invention peut permettre d'éviter le recours à des hautes tensions et d'éviter les sauts de modes lors du fonctionnement après séquence de démarrage.

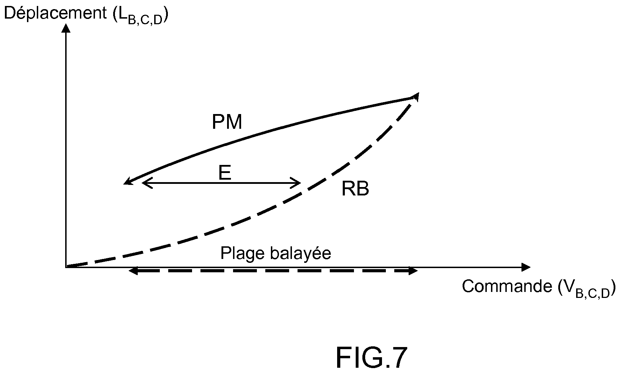

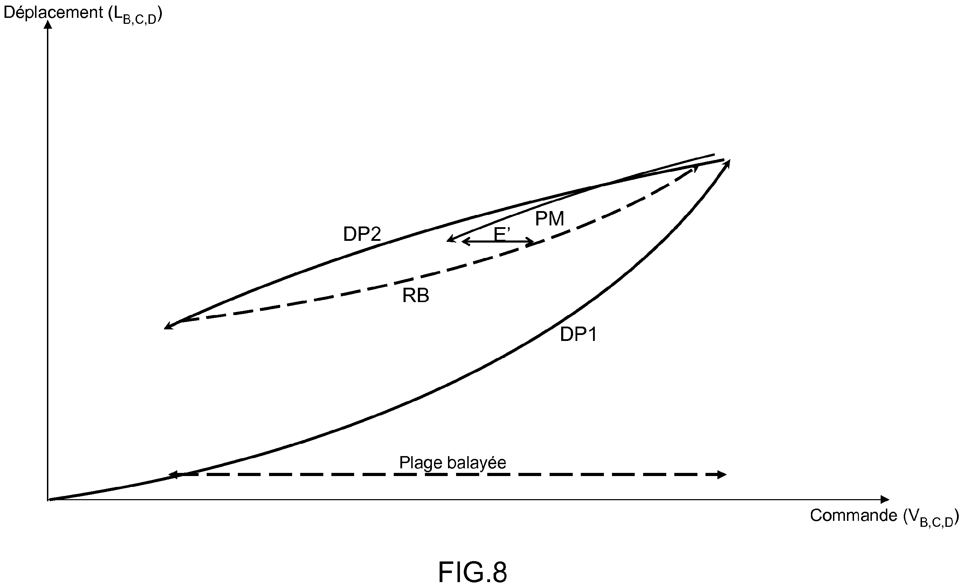

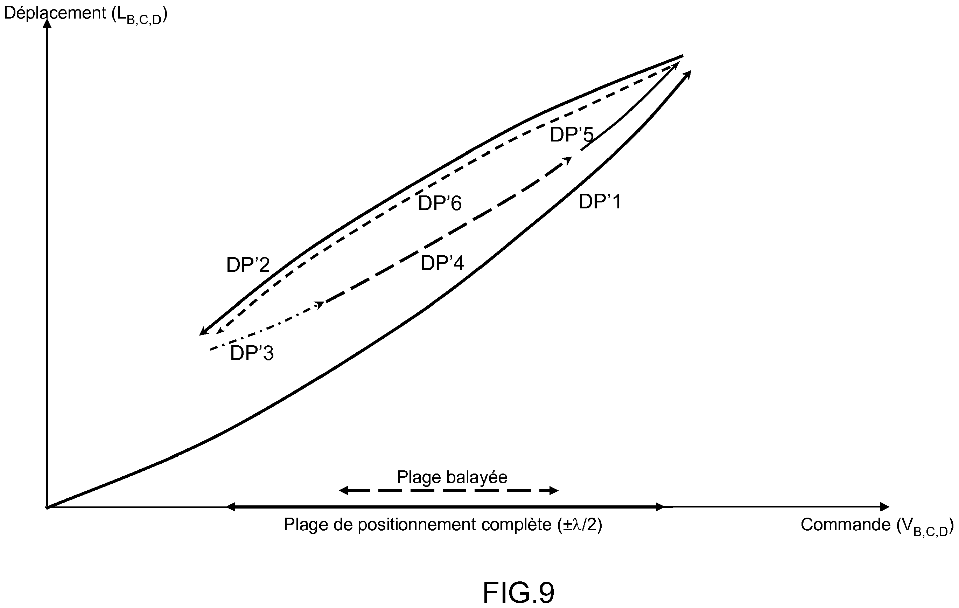

L'invention proposée peut également permettre de prendre en compte le phénomène d'hystérésis dans le positionnement des miroirs mobiles et de réduire son influence. Les séquences de positionnement décrites précédemment supposent une reproductibilité du déplacement des miroirs avec leur commande. Pour une valeur de commande $V_B$, $V_C$ ou $V_D$ donnée, les miroirs sont toujours décalés géométriquement d'une même quantité $L_B$, $L_C$ ou $L_D$ conformément à l'équation 1. Parmi les éléments qui composent ces miroirs, des matériaux qui présentent des hystérésis mécaniques peuvent être employés. La translation du miroir n'est alors plus linéaire avec sa commande et sa réponse présente une caractéristique du type illustré par la figure 7. Dans les séquences illustrées par la figure 7, à l'issue d'une première rampe de balayage RB en montée, les miroirs sont commandés vers une position repérée d'un maximum de gain, par exemple en reculant le miroir suivant un déplacement PM de positionnement du miroir. L'hystérésis de réponse introduit un écart de positionnement E entre la position demandée et la position réellement atteinte par les miroirs à l'issue de leurs translations. Le cumul de ces écarts entre les miroirs des trois cavités peut conduire à positionner les cavités laser significativement loin des maxima de gain prévus. En parcourant préalablement la plage de commande avant d'effectuer le balayage au cours duquel les puissances sont relevées et comparées, le phénomène d'hystérésis peut avantageusement être réduit comme illustré par les figures 8 et 9.

La figure 8 illustre un cas où la rampe est croissante avec une valeur moyenne positive. L'exploration préalable de la plage prévue par des déplacements DP1 et DP2 peut permettre de réduire l'hystérésis du miroir mobile à un écart de positionnement E'. Le balayage préalable peut être effectué en parcourant la plage dans un seul sens suivi d'une rampe croissante ou décroissante. L'écart de positionnement peut alors être réduit environ d'un facteur deux. La plage peut également être parcourue suivant un aller-retour complet puis suivie d'une rampe croissante ou décroissante. L'écart de positionnement est réduit d'un facteur trois à quatre. Plusieurs aller-retours peuvent être effectués pour réduire l'écart de positionnement en dessous d'une quantité voulue. L'invention proposée peut ainsi permettre de prendre en compte le phénomène d'hystérésis dans le positionnement des miroirs mobiles et de réduire son influence.

Après avoir montré comment une rampe préalable dans la plage de balayage peut permettre de réduire l'écart entre la position commandée et celle réellement atteinte dans la plage de positionnement comprise à $\pm\lambda/4$ par rapport aux valeurs médianes de repositionnement, il s'agit maintenant de montrer que l'hystérésis peut encore être réduite avec une séquence plus complexe. Afin d'améliorer la reproductibilité sur toute la plage du positionnement final, il peut convenir de commencer la séquence par un pré-balayage englobant les valeurs extrémales de cette plage comprise à $\pm\lambda/2$ par rapport aux valeurs médianes de repositionnement. Par exemple, les commandes miroirs peuvent suivre une rampe jusqu'à la valeur maximale atteignable au re-positionnement puis revenir au minimum, soit une variation de $\pm\lambda/2$. La plage de balayage s'étendant sur $\pm\lambda/4$ peut alors ensuite être explorée, par exemple en suivant une rampe croissante. Une fois le balayage achevé, le repositionnement peut encore avoir une reproductibilité améliorée si son état initial est comparable à celui précédant le balayage. Avant de commander le repositionnement, les miroirs peuvent être pilotés à nouveau selon une séquence comparable à celle du pré-balayage pour les amener à la valeur de départ du pré-balayage. Par exemple, dans le cas où la rampe est croissante avec une valeur moyenne positive, la séquence peut être du type de celle illustrée par la figure 9 pour optimiser le cycle de réduction d'hystérésis. Un déplacement DP'1 réalise un pré-balayage aller jusqu'à la fin de la plage complète, soit sur $\pm\lambda/2$. Un déplacement DP'2 réalise un pré-balayage retour au début de la plage complète. Un déplacement DP'3 réalise un positionnement au début de la plage de balayage. Un déplacement DP'4 réalise un balayage sur $\pm\lambda/4$. Un déplacement DP'5 réalise un positionnement à la fin de la plage de positionnement complète. Un déplacement DP'6 réalise un retour au début de cette plage. Les miroirs mobiles sont alors prêts à recevoir leur commande finale pour un écart de positionnement réduit du fait que le ralliement et la rampe de mesure utilisent le même côté du cycle d'hystérésis.

L'invention peut donc permettre au démarrage du gyrolaser de positionner simultanément les trois miroirs mobiles au plus proche d'un maximum de gain des trois cavités, quels que soient leurs intermodes, dans des intervalles d'amplitudes choisis et avec une précision voulue. Une fois le positionnement effectué, l'asservissement autonome de longueur de cavité peut être démarré. Il permet, avec sa propre constante de temps de convergence, de rallier les cavités plus finement à leur maximum d'intensité et de les y maintenir. Il s'agit maintenant de montrer qu'il est avantageusement possible d'effectuer un test à l'issue de la durée de convergence de l'asservissement autonome pour vérifier le bon déroulement des séquences selon l'invention décrites précédemment. Les indications de commande des miroirs peuvent être relevées à l'issue de la convergence de l'asservissement autonome et comparées à la plage prévue. L'écart entre la position de chaque miroir et le centre de sa plage de positionnement peut être calculé. Normalement, ces écarts ne doivent pas dépasser la moitié de l'intermode du miroir. Cependant, les bruits de mesures, la variation de l'intermode en température et le vieillissement peuvent conduire à augmenter cette valeur d'une marge supplémentaire. Dans le cas, par exemple, d'une commande des miroirs telle que décrite à l'équation 5, avec la capacité d'échantillonner les valeurs $I_X$, $I_Y$ et $I_Z$ et de piloter par logiciel les commandes $D_X$, $D_Y$ et $D_Z$, les commandes des miroirs peuvent être déterminées par l'équation
$$\begin{bmatrix} V_C \\ V_D \\ V_B \end{bmatrix} = -A \begin{bmatrix} -1 & 1 & 1 \\ 1 & -1 & 1 \\ 1 & 1 & -1 \end{bmatrix} \begin{bmatrix} I_X + D_X \\ I_Y + D_Y \\ I_Z + D_Z \end{bmatrix}.$$
Comme explicité précédemment, les commandes médianes $V_B^0$, $V_C^0$, $V_D^0$ correspondant au centre des plages peuvent être estimées par l'équation

$$\begin{cases} V_B^0 = A\left[-D_X^0 - D_Y^0 + D_Z^0\right] \\ V_C^0 = A\left[D_X^0 - D_Y^0 - D_Z^0\right] \\ V_D^0 = A\left[-D_X^0 + D_Y^0 - D_Z^0\right] \end{cases}.$$
L'écart entre les commandes $V_B$, $V_C$ et $V_D$ et le centre de leur plage respective peut être évalué par
$$\begin{cases} \Delta V_B = V_B - V_B^0 = -A\left[I_X + D_X - D_X^0 + I_Y + D_Y - D_Y^0 - I_Z - D_Z + D_Z^0\right] \\ \Delta V_C = V_C - V_C^0 = -A\left[-I_X - D_X + D_X^0 + I_Y + D_Y - D_Y^0 + I_Z + D_Z - D_Z^0\right] \\ \Delta V_D = V_D - V_D^0 = -A\left[I_X + D_X - D_X^0 - I_Y - D_Y + D_Y^0 + I_Z + D_Z - D_Z^0\right] \end{cases}.$$

Normalement, la valeur absolue de ces écarts ne dépasse pas le plus grand demi-intermode des miroirs $\Delta K/2$. En adoptant une marge supplémentaire ms et en notant $\Delta K' = \Delta K/A$ et $\Delta B,C,D = \Delta V_{B,C,D}/A$, la vérification des relations 17 qui suivent peut permettre de confirmer que le point de fonctionnement trouvé lors de ce test est cohérent avec le point issu des procédures de balayage, de re-centrage et de pré-positionnement selon l'invention :

$$\begin{cases} |\Delta B| = \left|I_X + D_X - D_X^0 + I_Y + D_Y - D_Y^0 - I_Z - D_Z + D_Z^0\right| < (1+ms) \times \Delta K' \\ |\Delta C| = \left|-I_X - D_X + D_X^0 + I_Y + D_Y - D_Y^0 + I_Z + D_Z - D_Z^0\right| < (1+ms) \times \Delta K' \quad (17) \\ |\Delta D| = \left|I_X + D_X - D_X^0 - I_Y - D_Y + D_Y^0 + I_Z + D_Z - D_Z^0\right| < (1+ms) \times \Delta K' \end{cases}$$

Dans le cas contraire, si l'un des écarts dépasse la limite convenue, un re-centrage peut à nouveau être proposé ou une panne être déclarée. Il peut également être convenu qu'une non-conformité à ce test n'indique pas une défaillance et le démarrage du gyromètre peut être poursuivi avec mise en mémoire du résultat du test.

L'invention décrite précédemment a encore pour principaux avantages qu'elle évite la problématique de compétition de mode. Par ailleurs, ne faisant plus l'hypothèse implicite d'un comportement mécanique similaire des miroirs en fonction de la température, la présente invention autorise une plus grande tolérance sur les différences de comportement entre les miroirs. Par conséquent, moins de miroirs sont envoyés au rebus en fin de chaîne de fabrication. Les gains de coût ne sont pas négligeables.

**Revendications**

1.  Méthode de positionnement de trois miroirs translatables (B, C, D) dans un gyromètre laser comportant trois cavités laser en anneau, le positionnement étant effectué au démarrage du gyromètre, chacune des trois cavités laser comportant :

    - un milieu amplificateur optique pouvant être excité de sorte à générer des ondes lumineuses ;
    - une cavité optique (X, Y, Z) formée par un ensemble de miroirs (A, B, C, D, E, F) incluant deux des miroirs translatables, la longueur de ladite cavité optique dépendant de la position des deux dits miroirs translatables, les deux dits miroirs translatables pouvant être déplacés dans des plages de positions conférant à la cavité optique des longueurs pour lesquelles le milieu amplificateur génère au moins une onde laser, les miroirs étant commandés par des tensions électriques de sorte que leurs déplacements sont proportionnels a ces tensions ;

    chacun des trois miroirs translatables entrant dans la formation de deux des trois cavités optiques, la méthode étant **caractérisée en ce qu'**elle comporte :

- une phase de pré-positionnement des trois miroirs à un triplet initial de positions respectives prédéterminées ;
- une phase de déplacement en translation des trois miroirs simultanément dans des plages ayant une même amplitude inférieure ou égale à l'intermode de la cavité optique ayant le plus grand intermode ($K_B$, $K_C$, $K_D$), de sorte à assurer que chacune des cavités optiques passe par une longueur pour laquelle le milieu amplificateur offre un gain maximum (M), les intensités des ondes laser parcourant respectivement chacune des cavités optiques étant mesurées pour chaque triplet de positions occupées par les miroirs, l'intermode étant défini comme la variation de commande de tension sur l'un des miroirs qui permet de changer la longueur de la cavité correspondante d'une longueur d'onde optique $\lambda$ ;
- une phase de détermination, à partir des trois triplets de positions des miroirs ayant permis respectivement à chacune des trois cavités de fournir une intensité maximale, de la longueur de chacune des trois cavités pour laquelle ladite cavité fournit une intensité maximale ;
- une phase de détermination d'un unique triplet final de positions des miroirs permettant de conférer simultanément aux trois cavités les longueurs pour lesquelles elles fournissent une intensité maximale ;
- une phase de positionnement des miroirs au triplet final de positions.

2. Méthode selon la revendication 1, **caractérisée en ce que** le triplet initial de positions des trois miroirs (B, C, D) est extrait d'une table faisant correspondre à des valeurs de température un triplet de positions des miroirs conférant respectivement à chacune des cavités optiques (X, Y, Z) une longueur pour laquelle le milieu amplificateur offre un gain maximum (M) à ladite température.

3. Méthode selon la revendication 1, **caractérisée en ce que** les milieux amplificateurs sont des gaz ionisables par une décharge électrique.

4. Méthode selon la revendication 1, **caractérisée en ce que** le gyromètre est un gyromètre triaxe.

5. Méthode selon la revendication 1, les trois cavités optiques (X, Y, Z) ayant un même intermode (K), **caractérisée en ce que** l'amplitude de déplacement des trois miroirs (B, C, D) est égale à la moitié dudit intermode.

6. Méthode selon la revendication 1, **caractérisée en ce qu'**elle comporte une phase préalable de balayage des trois miroirs (B, C, D) dans des plages couvrant les plages de déplacement des miroirs mais sans mesurer les intensités des ondes, de sorte à diminuer l'hystérésis entre la phase de déplacement des miroirs et la phase de positionnement des miroirs.

7. Méthode selon la revendication 1, le gyromètre comportant un mécanisme d'ajustement permettant, à partir du triplet final de positions, d'ajuster en permanence les positions des miroirs translatables (B, C, D) de sorte à assurer que les cavités (X, Y, Z) ont des longueurs respectives leur permettant de fournir en permanence une intensité maximale, **caractérisée en ce que** la méthode comporte une phase finale de comparaison du triplet final de positions avec un triplet de positions vers lequel le mécanisme d'ajustement fait converger les miroirs après un délai donné, les phases précédentes de la méthode étant réitérées et/ou la différence étant mise en mémoire et/ou le dispositif étant mis en panne si l'un des miroirs s'est éloigné de la position qu'il avait à l'issue de la phase de positionnement au-delà d'un seuil donné.

**Patentansprüche**

1. Verfahren zur Positionierung von drei verschiebbaren Spiegeln (B, C, D) in einem Lasergyrometer, das drei Ringlaserhohlkammem aufweist, wobei die Positionierung beim Einschalten des Gyrometers durchgeführt wird, wobei jede der drei Laserhohlkammern aufweist:

- ein optisches Verstärkermedium, das angeregt werden kann, um Lichtwellen zu erzeugen;
- eine optische Hohlkammer (X, Y, Z), die durch eine Gesamtheit von Spiegeln (A, B, C, D, E, F) gebildet wird, die zwei der verschiebbaren Spiegel einschließen, wobei die Länge der optischen Hohlkammer von der Position der beiden verschiebbaren Spiegel abhängt, wobei die beiden verschiebbaren Spiegel in Positionsbereiche verlagert werden können, die der optischen Hohlkammer Längen verleihen, für die das Verstärkermedium mindestens eine Laserwelle erzeugt, wobei die Spiegel durch elektrische Spannungen derart gesteuert werden, dass ihre Verschiebungen proportional zu diesen Spannungen sind;

wobei jeder der drei verschiebbaren Spiegel in die Ausformung von zwei der drei optischen Hohlkammern eingeht, wobei das Verfahren **dadurch gekennzeichnet** wird, dass es aufweist:

- eine Phase der Vorpositionierung der drei Spiegel in einer Anfangsdreiergruppe von jeweils vorgegebenen Positionen;
- eine gleichzeitige Linearverschiebungsphase der drei Spiegel in Bereichen mit einer selben Größe kleiner oder gleich der Zwischenmode der optischen Hohlkammer mit der stärksten Zwischenmode ($K_B$, $K_C$, $K_D$), um sicherzustellen, dass jede der optischen Hohlkammern eine Länge durchläuft, für die das Verstärkermedium eine Höchstverstärkung (M) bietet, wobei die Intensitäten der Laserwellen, die jeweils durch jede der optischen Hohlkammern gehen, für jede durch die Spiegel eingenommene Dreiergruppe der Positionen gemessen werden, wobei die Zwischenmode als die Steuerungsänderung der Spannung auf einem der Spiegel definiert wird, die die Länge der entsprechenden Hohlkammer um eine optische Wellenlänge λ zu ändern erlaubt;
- eine Bestimmungsphase der Länge jeder der drei Hohlkammern, für die die Hohlkammer eine Höchstintensität liefert, anhand der drei Dreiergruppen der Spiegelpositionen, die jeder der drei Hohlkammern jeweils erlaubt haben, eine Höchstintensität zu liefern;
- eine Bestimmungsphase einer endgültigen Dreiergruppe von Spiegelpositionen, die erlaubt, den drei Hohlkammern gleichzeitig die Längen zu verleihen, für die sie eine Höchstintensität liefern;
- eine Positionierungsphase der Spiegel zu der endgültigen Positionsdreiergruppe.

2. Verfahren nach Anspruch 1, **dadurch gekennzeichnet, dass** die Anfangsdreiergruppe von Positionen der drei Spiegel (B, C, D) aus einer Tabelle extrahiert wird, die dazu führt, dass die Anfangsdreiergruppe von Spiegelpositionen den Temperaturwerten entspricht, die jeder der optischen Hohlkammern (X, Y, Z) jeweils eine Länge verleiht, für die das Verstärkermedium eine Höchstverstärkung (M) für die Temperatur bietet.

3. Verfahren nach Anspruch 1, **dadurch gekennzeichnet, dass** die Verstärkermedien durch eine elektrische Entladung ionisierbare Gase sind.

4. Verfahren nach Anspruch 1, **dadurch gekennzeichnet, dass** das Gyrometer ein Triaxial-Gyrometer ist.

5. Verfahren nach Anspruch 1, wobei die drei optischen Hohlkammern (X, Y, Z) eine selbe Zwischenmode (K) haben, **dadurch gekennzeichnet, dass** die Größe der Verschiebung der drei Spiegel (B, C, D) gleich der Hälfte der Zwischenmode ist.

6. Verfahren nach Anspruch 1, **dadurch gekennzeichnet, dass** es eine Vorphase der Abtastung der drei Spiegel (B, C, D) in den Bereichen aufweist, die die Verschiebungsbereiche der Spiegel abdecken, ohne aber die Intensitäten der Wellen zu messen, um die Hysterese zwischen der Verschiebungsphase der Spiegel und der Positionierungsphase der Spiegel zu verringern.

7. Verfahren nach Anspruch 1, wobei das Gyrometer einen Anpassungsmechanismus aufweist, der es erlaubt, ausgehend von der endgültigen Dreiergruppe der Positionen, die Positionen der verschiebbaren Spiegel (B, C, D) dauerhaft anzupassen, um sicherzustellen, dass die Hohlkammern (X, Y, Z) jeweilige Längen haben, die ihnen erlauben, dauerhaft eine Höchstintensität zu liefern, **dadurch gekennzeichnet, dass** das Verfahren eine Endphase des Vergleichs der endgültigen Dreiergruppe der Positionen mit einer Dreiergruppe der Positionen aufweist, zu der der Anpassungsmechanismus nach einer bestimmten Verzögerung ein Konvergieren der Spiegel bewirkt, wobei die vorhergehenden Phasen des Verfahrens wiederholt werden und/oder die Differenz gespeichert wird und/oder die Vorrichtung abgeschaltet wird, wenn einer der Spiegel sich von der Position entfernt hat, die er über einen gegebenen Schwellenwert hinaus am Ende der Positionierungsphase hatte.

**Claims**

1. A method for positioning three translatable mirrors (B, C, D) in a laser gyrometer comprising three laser ring cavities, the positioning being carried out upon start-up of the gyrometer, each of the three laser cavities comprising:

- an optical amplifier medium that can be excited so as to generate light waves;
- an optical cavity (X, Y, Z) formed by a set of mirrors (A, B, C, D, E, F) including two of the translatable mirrors, the length of said optical cavity depending on the position of said two translatable mirrors, said two translatable mirrors being able to be displaced in ranges of positions providing the optical cavity with lengths at which the amplifier medium generates at least one laser wave, the mirrors being controlled by electric voltages so that their displacements are proportional to these voltages,

each of the three translatable mirrors being used to form two of the three optical cavities, the method being **characterised in that** it comprises:

- a phase of pre-positioning the three mirrors at an initial triplet of predetermined respective positions;
- a phase of simultaneously translationally displacing the three mirrors in ranges with the same amplitude that is less than or equal to the intermode of the optical cavity with the highest intermode ($K_B$, $K_C$, $K_D$), so as to ensure that each of the optical cavities passes through a length at which the amplifier medium provides a maximum gain (M), with the intensities of the laser waves respectively passing through each of the optical cavities being measured for each triplet of positions occupied by the mirrors, with the intermode being defined as the control voltage variation on one of the mirrors that allows the length of the corresponding cavity to be changed by an optical wavelength $\lambda$;
- a phase of determining, based on the three triplets of positions of the mirrors that respectively allowed each of the three cavities to provide a maximum intensity, the length of each of the three cavities at which said cavity provides a maximum intensity;
- a phase of determining a single final triplet of positions of the mirrors allowing the three cavities to be simultaneously provided with the lengths at which they provide a maximum intensity;
- a phase of positioning the mirrors at the final triplet of positions.

2. The method as claimed in claim 1, **characterised in that** the initial triplet of positions of the three mirrors (B, C, D) is extracted from a table correlating a triplet of positions of the mirrors with temperature values respectively providing each of the optical cavities (X, Y, Z) with a length at which the amplifier medium provides a maximum gain (M) at said temperature.

3. The method as claimed in claim 1, **characterised in that** the amplifier media are gases that can be ionised by an electrical discharge.

4. The method as claimed in claim 1, **characterised in that** the gyrometer is a triple axis gyrometer.

5. The method as claimed in claim 1, the three optical cavities (X, Y, Z) having the same intermode (K), **characterised in that** the displacement amplitude of the three mirrors (B, C, D) is equal to half of said intermode.

6. The method as claimed in claim 1, **characterised in that** it comprises a preliminary phase of scanning the three mirrors (B, C, D) in ranges covering the displacement ranges of the mirrors but without measuring the intensities of the waves, so as to reduce the hysteresis between the phase of displacing the mirrors and the phase of positioning the mirrors.

7. The method as claimed in claim 1, the gyrometer comprising an adjustment mechanism allowing, based on the final triplet of positions, constant adjustment of the positions of the translatable mirrors (B, C, D), so as to ensure that the cavities (X, Y, Z) have respective lengths that allow them to constantly provide a maximum intensity, **characterised in that** the method comprises a final phase of comparing the final triplet of positions with a triplet of positions towards which the adjustment mechanism makes the mirrors converge after a given delay, with the preceding phases of the method being repeated and/or the difference being stored in a memory and/or the device being rendered inoperative if one of the mirrors has moved away, beyond a given threshold, from the position that it occupied on completion of the positioning phase.

FIG.1a

FIG.1b

FIG.2

FIG.3

$$\begin{cases} V_D \leftarrow V_D - K/2 \\ V_B \leftarrow V_B - K/2 \end{cases}$$

$$\begin{cases} V_D \leftarrow V_D + K/2 \\ V_B \leftarrow V_B + K/2 \end{cases}$$

$$\begin{cases} V_D \leftarrow V_D \pm K/2 \\ V_B \leftarrow V_B \mp K/2 \end{cases}$$

$P_X$

$V_D + V_B$

FIG.4

$$\text{ou} \begin{cases} V_D \leftarrow V_D - K \\ V_B \leftarrow V_B - K \end{cases}$$

$$\text{ou} \begin{cases} V_D \leftarrow V_D + K \\ V_B \leftarrow V_B + K \end{cases}$$

$P_X$

$V_D + V_B$

FIG.5

Commande ($V_{B,C,D}$)

B

C

D

$T_{min}$

$T_{max}$

T

FIG.6

FIG.7

EP 2 242 992 B1

FIG.8

**FIG.9**

EP 2 242 992 B1

**RÉFÉRENCES CITÉES DANS LA DESCRIPTION**

**Documents brevets cités dans la description**

- US 4755057 A
- US 5450198 A